# EUROPÄISCHE PATENTSCHRIFT

(11) **EP 2 525 268 B1**
(45) Veröffentlichungstag und Bekanntmachung des Hinweises auf die Patenterteilung: **15.01.2014**
(21) Anmeldenummer: 11166352.2
(22) Anmeldetag: 17.05.2011
(51) Int. Cl.: G05B 19/409

(54) **Schaltvorrichtung für eine Maschine, eine Anlage und/oder ein Transportsystem**
Switching device for a machine, assembly and/or transport system
Dispositif de commutation pour une machine, une installation et/ou un système de transport

(43) Veröffentlichungstag der Anmeldung: 21.11.2012
(73) Patentinhaber: Siemens Aktiengesellschaft, 80333 München (DE)
(72) Erfinder: Hauf, Ronald, 91096, Möhrendorf (DE)

(56) Entgegenhaltungen:
- WO-A1-94/22069
- CN-A- 101 894 279
- DE-A1-102007 039 609
- DE-A1-102009 017 842
- DE-C1- 10 142 738
- DE-U1-202009 009 886

## Beschreibung

Die vorliegende Erfindung betrifft eine Schaltvorrichtung für eine Maschine, eine Anlage und/oder ein Transportsystem mit einem Touchscreen und zumindest einem Sensorelement, das mit dem Touchscreen gekoppelt ist und mit dem eine Berührung des Touchscreens erfassbar ist. Diese Schaltvorrichtung kann auch für Sicherheitsleitstände in Kraftwerken eingesetzt werden. Des Weiteren betrifft die vorliegende Erfindung ein Verfahren zum Bedienen einer Maschine, einer Anlage und/oder eines Transportsystems.

Touchscreens werden zunehmend in verschiedenen Geräten und für unterschiedliche Anwendungen verwendet. Solche Touchscreens weisen ein berührungsempfindliches Anzeigeelement auf, wobei durch entsprechende Sensorelemente eine Berührung des Anzeigeelements erfasst wird, welche beispielsweise durch einen Finger bzw. durch mehrere Finger (Multi-Touch) einer Bedienperson oder mit Hilfe eines entsprechenden Zeigestifts erfolgt. Die Touchscreens werden unter anderem für Informationsmonitore, Automaten und insbesondere für Smartphones verwendet.

Touchscreens können ebenso für die Steuerung von Maschinen und Anlagen in der Industrie eingesetzt werden. Bei Bediengeräten, die beispielsweise Bedienfelder, Maschinensteuertafeln oder Handhelds umfassen, welche zur Steuerung von Maschinen, Anlagen oder Transportsystemen genutzt werden, werden immer häufiger Touchscreens anstatt der klassischen Keyboards verwendet. Die geschlossenen Bedienfronten der Touchscreens, bei denen die Abdeckung bzw. Trägeroberfläche beispielsweise aus Glas gefertigt sind, sind sehr robust und haben eine hohe Schutzart (mindestens IP65). Durch die Verwendung von Touchscreens sind keine mechanischen Bedienelementen und Bauteile - wie zum Beispiel Taster, Schalter oder Stecker - erforderlich und der mechanische Verschleiß und die Verschmutzung als Fehlerursachen entfallen.

Die DE 20 2009 009 886 U1 beschreibt einen Touchscreen zum Steuern von Geräten oder Maschinen, wobei unterschiedliche Betätigungsfelder des Touchscreens zur Erzeugung unterschiedlicher Signale jeweils mit einem Finger bedienbar sind. Jeder Finger erzeugt dabei jeweils ein eindeutiges, individuelles Steuersignal. Der Touchscreen kann für Sicherheitsanwendungen genutzt werden, bei denen die Anforderung besteht, die Befehle mit beiden Händen auszuführen.

Des Weiteren ist aus der DE 101 42 738 C1 einen Vorrichtung zur Bedienung eines medizinischen Geräts bekannt, die einen Touchscreen umfasst. Die Bedienoberfläche des Touchscreens weist Schaltflächen auf, durch die eine Aktion des medizinischen Geräts bewirkt werden kann. Zudem weist die Bedienoberfläche einen Stoppbereich auf, durch dessen Betätigung jede Aktion gestoppt wird. Dabei sind die Schaltflächen und der Stoppbereich räumlich derart auf der Bedienoberfläche verteilt, dass Mittelpunkte zwischen jeder Schaltfläche und dem Stoppbereich außerhalb jeder Schaltfläche liegen.

Schließlich beschreibt die DE 10 2009 017 842 A1 ist ein Verfahren zur Notabschaltung einer elektrischen Anlage, welche einen Berührungssensor umfasst. Hierbei wird zumindest eine mit der Art der Berührung des Berührungssensors korrelierte Kenngröße als erster Messwert erfasst. Zu einem späteren Zeitpunkt wird diese Kenngröße als zweiter Messwert erneut erfasst und anschließen mit dem ersten Messwert verglichen. Dabei erfolgt eine Notabschaltung der elektrischen Anlage, wenn der erste und der zweite Messwert zumindest in einer Kenngröße identisch sind.

Die Aufgabe der vorliegenden Erfindung ist es, einen besonders sicheren Betrieb von Maschinen, Anlagen und/oder Transportsystemen über Touchscreens zu ermöglichen.

Diese Aufgabe wird erfindungsgemäß gelöst durch eine Schaltvorrichtung für eine Maschine, eine Anlage und/oder ein Transportsystem mit einem Touchscreen, und zumindest einem Sensorelement, das in dem Touchscreen enthalten ist und mit dem eine Berührung des Touchscreens erfassbar und ein entsprechendes Signal ausgebbar ist, wobei eine Notstillsetzung und/oder eine Notabschaltung der Maschine, der Anlage und/oder des Transportsystems in Abhängigkeit des Signals des zumindest einen Sensorelements mittels der Schaltvorrichtung ausführbar ist und wobei die komplette Fläche des Touchscreens als Auslösefläche dient, um die Notstillsetzung und/oder Notabschaltung zu bewirken, und die Notstillsetzung und/oder Notabschaltung in Abhängigkeit von einer Überschreitung eines Schwellwerts des Signals des zumindest einen Sensorelements ausführbar ist.

Im Folgenden sind in diesem Zusammenhang unter dem Begriff Notabschaltung alle Funktionen zu verstehen, welche in Folge der Betätigung eines bekannten Not-Halt-Tasters ausgeführt werden können. Diese beinhalten unter anderem das "Stillsetzen im Notfall" bzw. die Notstillsetzung und das "Ausschalten im Notfall". Die Notabschaltung ist selbsthaltend ausgelegt und kann nur durch entsprechende Bedienschritte wieder aufgehoben werden.

Für die Begriffe Not-Halt-Taster, Not-Aus-Taster, Notausschalter wird im Folgenden der Begriff Not-Halt-Taster verwendet.

Der vorliegenden Erfindung liegt die Idee zugrunde, dass die Notabschaltung einer Maschine, einer Anlage oder eines Transportsystems heute immer noch ausschließlich über einen mechanischen Befehlsgeber, den rot-gelben Not-Halt-Taster, ausgelöst wird. Der Not-Halt-Taster ist integraler Bestandteil von Bedienkomponenten oder ist als separate Einheit angebracht. Seit Mitte der 90er Jahre können in der Sicherheitstechnik auch Elektronik und Software, bei entsprechender Ausführung, eingesetzt werden. Die Signalübertragung und -auswertung von Not-Halt-Tastern erfolgt heute bereits überwiegend elektronisch.

Erfindungsgemäß wird eine Schaltvorrichtung bereitgestellt, welche einen Touchscreen bzw. eine Anzeigeelement aufweist. Mit dem Touchscreen können somit die Bedienung einer Maschine, einer Anlage und/oder eines Transportsystems gesteuert werden, es können aber auch entsprechende Daten beispielsweise über den aktuellen Betriebszustand der Maschine, der Anlage und/oder des Transportsystems dargestellt werden. Durch die Schaltvorrichtung mit dem Anzeigeelement bzw. dem Touchscreen sollen zudem alle Funktion des bekannten Not-Halt-Tasters ermöglicht werden. Die Schaltvorrichtung kann die dafür notwendigen Hardwarekomponenten und/oder Softwareprogramme beinhalten, um eine Notabschaltung zu ermöglichen. Diese Komponenten können ebenso außerhalb der Schaltvorrichtung angeordnet sein. Die Hardware-Varianz kann hier auf ein Minimum beschränkt werden und die entsprechende Kundendifferenzierung kann rein über die Software erfolgen. Zudem kann durch die Verwendung der Schaltvorrichtung die Anzahl der Schnittstellen reduziert werden. Die Notabschaltung soll durch die sichere Ausführung die aktuellen Normen erfüllen. Somit entstehen keinerlei Einbußen bzw. Nachteile gegenüber dem bekannten Not-Halt-Taster.

Die komplette Fläche des Touchscreens bzw. des Anzeigeelements dient in diesem Fall als Auslösefläche, durch deren Betätigung eine Notabschaltung der Maschine, der Anlage und/oder des Transportsystems bewirkt werden kann. Zu diesem Zweck ist zumindest ein Sensorelement vorgesehen, welches mit dem Touchscreen gekoppelt ist, mit dem eine Berührung des Touchscreens durch einen Bediener erfassbar ist. Durch die Berührung des Touchscreens durch eine Bedienperson kann somit die Maschine, die Anlage oder das Transportsystem bedient bzw. gesteuert werden und zudem eine Notabschaltung bewirkt werden. Die Bedienung und das Betätigen der Notabschaltung erfolgen bevorzugt dadurch, dass die Bedienperson den Touchscreen mit einem oder mehreren Fingern berührt bzw. mit den Fingern auf den Touchscreen drückt. Eine Notstillsetzung bzw. Notabschaltung der Maschine, der Anlage und/oder des Transportsystems ist in Abhängigkeit eines Signals des zumindest einen Sensorelements mittels der Schaltungsvorrichtung ausführbar.

Die Fläche des Touchscreens bzw. Anzeigeelements weist durch eine entsprechende Kennzeichnung, beispielsweise einen gelbrot-gelben Rahmen, auf die integrierte Not-Halt-Funktion hin. Die Kennzeichnung kann über eine reine Farbmarkierung oder als Bildschirmanzeige bzw. über Leuchtdioden (LEDs) ausgeführt sein. Durch den Touchscreen der Schaltvorrichtung wird eine deutlich größere Betätigungsfläche als bisher zum Auslösen einer Notabschaltung bereitgestellt und zudem kann die Bedienperson schneller reagieren, da sie bei der Bedienung der Maschine, der Anlage und/oder des Transportsystems das Anzeigeelement bzw. dem Touchscreen bereits berührt.

Die Schaltvorrichtung kann beispielsweise zur Steuerung von elektrischen Maschinen und Anlagen, für Chemieanlagen, Kraftwerke, in Hygienebereichen in Krankenhäusern oder der Medizintechnik, in der Nahrungs- und Genussmittelindustrie oder in Leitständen von Transportgeräten (z.B. Züge, Schiffe) und -systemen eingesetzt werden.

Durch die Schaltvorrichtung kann für die oben genannten Anwendungen bzw. Einsatzgebiete die Infrastruktur vereinfacht werden, eine höhere Verfügbarkeit ermöglicht werden und die Sicherheit erhöht werden.

Die Notabschaltung in Abhängigkeit von einer Überschreitung eines Schwellwerts des Signals des zumindest einen Sensorelements ausführbar. Das zumindest eine Sensorelement erfasst die Berührung des Touchscreens einer Bedienperson und gibt in Abhängigkeit davon ein entsprechendes Signal aus. Überschreitet dieses Signal einen vorgegebenen Schwellwert, wird eine Notabschaltung der Maschine, der Anlage und/oder des Transportsystems ausgeführt. Eine andere Möglichkeit besteht darin, den zeitlichen Verlauf des Signals des zumindest einen Sensorelements zu überprüfen und beispielsweise in Abhängigkeit von der Flankensteilheit des Signals des Sensorelements eine Notabschaltung auszuführen. Durch die Vorgabe eines Schwellwerts oder die Untersuchung des zeitlichen Verlaufs des Signals kann deutlich zwischen einer normalen Bedienung und der Absicht der Bedienperson, einen Notabschaltung der Maschine, der Anlage und/oder des Transportsystems zu bewirken, unterschieden werden.

In einer bevorzugten Ausführungsform ist mit dem zumindest einen Sensorelement eine Amplitude eines Drucks, welcher auf den Touchscreen ausgeübt wird, erfassbar und ein entsprechender Wert in dem Signal ausgebbar. Wenn eine Bedienperson gerade die Maschine, die Anlage und/oder das Transportsystem mittels des Touchscreens bedient, kann bei Gefahr durch die Bedienperson ein erhöhter Druck auf den Touchscreen ausgeübt werden, wodurch eine Notabschaltung bewirkt wird. Ebenso kann der zeitliche Verlauf des Drucks auf den Touchscreen untersucht werden.

Dies hat den Vorteil, dass bei der Bedienung der Maschine, der Anlage und/oder des Transportsystems der Finger bzw. die Finger der Bedienperson nicht von dem Touchscreen abgehoben werden muss bzw. müssen, um eine Notabschaltung zu bewirken. Das Auslösen der Notabschaltung ist für die Bedienperson intuitiv, da es dem bekannten festen Druck auf den Not-Halt-Taster entspricht. Hier kann durch einen festen bzw. erhöhten Druck der Bedienperson auf den Touchscreen eine Notabschaltung bewirkt werden. Somit kann die Sicherheit erhöht werden, da hier eine viel schnellere Reaktion möglich ist und direkt und reflexartig reagiert werden kann.

In einer weiteren Ausführungsform ist mit dem zumindest einen Sensorelement eine Amplitude einer Beschleunigung der Berührung des Touchscreens erfassbar und ein entsprechender Wert in dem Signal ausgebbar. Anstelle des Drucks, welcher auf den Touchscreen ausgeübt wird, kann ebenso die Beschleunigung einer Berührung des Touchscreens ausgewertet werden. Dies bietet sich beispielsweise an, wenn sich die Bedienperson in der Nähe der Schaltvorrichtung befindet und die Maschine, die Anlage und/oder das Transportsystem gerade nicht aktiv mit der Schaltvorrichtung bedient. Hierbei wird die Erkenntnis berücksichtigt, dass die Not-Halt-Taster in der Regel nicht gedrückt werden, sondern vielmehr auf die Not-Halt-Taster geschlagen wird.

Vorteilhafterweise ist die Notabschaltung in Abhängigkeit von dem Signal des Sensorelements und in Abhängigkeit von einem Signal eines weiteren Sensorelements ausführbar. Um eine Fehlauslösung der Notabschaltung der Maschine, der Anlage und/oder des Transportsystems zu vermeiden, ist es sinnvoll, die Sensorelemente des Touchscreens bzw. des Anzeigeelements diversitär und redundant auszuführen. Auf diese Weise kann eine Fehlauslösung, welche beispielsweise durch die Sonneneinstrahlung oder durch Flüssigkeiten auf den Touchscreen verursacht wird, verhindert werden. Somit wird Sicherheit und Zuverlässigkeit bei der Bedienung und bei dem Betrieb von Maschinen, Anlagen oder Transportsystemen erhöht.

In einer Ausgestaltung der Erfindung wird die Notabschaltung nur dann ausgeführt, wenn die Signale der beiden Sensorelemente gleichzeitig vorliegen. Auf diese Weise kann eine Fehlauslösung der Notabschaltung der Maschine, der Anlage und/oder des Transportsystems besonders effektiv vermieden werden. Ebenso ist es denkbar, dass die Signale der zwei Sensorelemente in einem vorgegebenen zeitlichen Abstand hintereinander betätigt werden müssen, um eine Notabschaltung zu erreichen. Die Verwendung von zwei Sensorelementen eignet sich beispielsweise bei Kraftwerken, da hier eine Fehlbedienung vermieden werden soll.

Vorteilhafterweise sind die zwei Sensorelemente zum Erfassen gleicher Messgrößen ausgebildet. Die Berührung des Anzeigeelements bzw. des Touchscreens kann mit bekannten Sensorprinzipien ermittelt werden. Die Berührung kann beispielsweise kapazitiv, resistiv, optisch, induktiv, über Ultraschall (Surface Acoustic Wave), mittels Dispersive Signal Technologie (DST - Biegewellenverfahren) oder piezoelektrisch erfasst werden. Je nach Konzept kann es erforderlich sein, dass für die Notabschaltung mehrere Sensorelemente eingesetzt werden. Ebenso ist es denkbar, dass zwei Sensorelemente mit unterschiedlichen Sensorprinzipien zu verwenden.

In einer weiteren Ausführungsform ist in Abhängigkeit des Signals des zumindest einen Sensorelements mittels der Schaltvorrichtung eine Not-Aus-Schaltung ausführbar, welche eine galvanische Trennung der Maschine, der Anlage und/oder des Transportsystems von der jeweiligen Spannungsversorgung bewirkt. Somit kann verhindert werden, dass eine Person durch einen Stromunfall bzw. durch einen elektrischen Schlag verletzt wird.

In einer weiteren vorteilhaften Ausgestaltung ist mit der Schaltvorrichtung eine Notabschaltung einer Bedienperson kommunizierbar. Ist die Notabschaltung der Maschine, der Anlage und/oder des Transportsystems ausgelöst, so wird dies beispielsweise optisch oder auch akustisch angezeigt. Zu diesem Zweck kann beispielsweise ein entsprechendes Warnsignal ausgegeben werden. Bevorzugt wird die Auslösung der Notabschaltung optisch, beispielsweise durch das Blinken eines umlaufenden Farbrahmens oder als Anzeige auf dem Touchscreen, dargestellt. Ebenso kann auf dem Touchscreen ein entsprechender Text oder ein Symbol - beispielsweise ein Abbild des Not-Halt-Tasters - dargestellt werden.

Durch die optische Darstellung kann ebenso zwischen verschiedenen Betriebszuständen differenziert werden. Damit besteht als Nebeneffekt erstmals die Möglichkeit, inaktive Bedienelemente kenntlich zu machen, bei denen die Not-Halt-Funktion nicht mehr wirksam ist. Damit wäre ein heute noch bestehendes Problem gelöst. Das gilt vergleichbar auch bei Maschinen, die komplett ausgeschaltet sind.

Schließlich wird erfindungsgemäß bereitgestellt ein Verfahren zum Bedienen einer Maschine, einer Anlage und/oder eines Transportsystems durch Berühren eines Touchscreens, wobei der Touchscreen mit zumindest einem Sensorelement ausgestattet ist, mit welchem die Berührung erfasst und ein entsprechendes Signal ausgegeben wird, wobei eine Notabschaltung der Maschine, der Anlage und/oder des Transportsystems in Abhängigkeit des Signals des zumindest einen Sensorelements ausgeführt wird, wobei die komplette Fläche des Touchscreens als Auslösefläche dient, um die Notstillsetzung und/oder Notabschaltung zu bewirken, und die Notstillsetzung und/oder Notabschaltung in Abhängigkeit von einer Überschreitung eines Schwellwerts des Signals des zumindest einen Sensorelements ausgeführt wird.

Die in Bezug auf die erfindungsgemäße Schaltvorrichtung beschriebenen Weiterbildungen lassen sich entsprechend auf das erfindungsgemäße Verfahren übertragen.

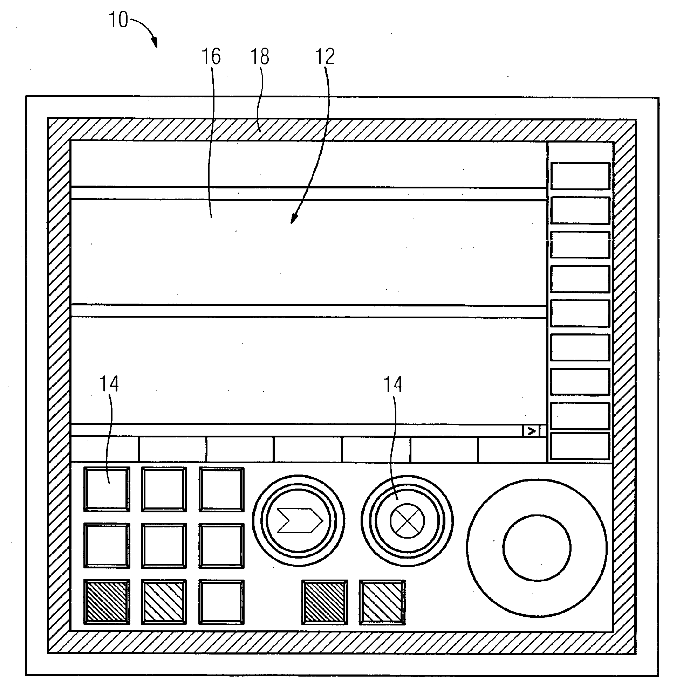

Die vorliegende Erfindung wird nun anhand der beigefügten Zeichnung näher erläutert. Die Figur zeigt eine schematische Darstellung einer Schaltvorrichtung für eine Maschine, eine Anlage und/oder ein Transportsystem.

Die nachfolgend näher geschilderten Ausführungsbeispiele stellen bevorzugte Ausführungsformen der vorliegenden Erfindung dar.

Die Figur zeigt in einer schematischen Darstellung eine Schaltvorrichtung 10 für eine Maschine, eine Anlage und/oder ein Transportsystem. Diese Schaltvorrichtung 10 beinhaltet einen Touchscreen 12 bzw. ein Anzeigeelement, wobei zumindest ein hier nicht dargestelltes Sensorelement mit dem Touchscreen 12 gekoppelt ist. Das Sensorelement kann beispielsweise auch in die Trägeroberfläche des Touchscreens 12 integriert sein. Mit dem zumindest einen Sensorelement kann eine Berührung des Touchscreens 12 erfasst werden. Durch das Berühren des Touchscreens 12 durch eine Bedienperson kann eine Maschine, eine Anlage oder ein Transportsystem gesteuert bzw. bedient werden oder entsprechende Funktionen derselben ausgewählt werden.

Zu diesem Zweck sind mehrere Bedienbereiche 14 auf dem Anzeigeelement 12 dargestellt, welche beispielsweise eine Taste darstellen können. Aktuelle Informationen bzw. Funktionen der Maschine, der Anlage und/oder des Transportsystems, welche mit Hilfe der Schaltvorrichtung 10 gesteuert werden, werden auf einem entsprechenden Anzeigebereich 16 des Touchscreens 12 dargestellt.

Die Position, Anordnung und Größe der Bedienbereiche 14 und der Anzeigebereiche 16 sind frei wählbar bzw. konfigurierbar. Die Darstellung in der Figur zeigt ein Ausführungsbeispiel.

Die Schaltvorrichtung 10 ermöglicht somit alle Funktionen zur Steuerung und Bedienung von Maschinen, Anlagen oder Transportsystemen und soll zudem alle Funktionen des bekannten Not-Halt-Tasters beinhalten. Die für die Notabschaltung erforderlichen Hardwarekomponenten bzw. Elektronikbauteile und die Softwareprogramme können in die Schaltvorrichtung 10 integriert sein. Ebenso ist es denkbar, dass diese Komponenten außerhalb der Schaltvorrichtung 10 angeordnet sind. Hierzu kann in der Schaltvorrichtung 10 eine entsprechende Auswertelogik zum Auswerten der Sensorsignale vorgesehen sein.

Eine Notabschaltung der Maschine, der Anlage und/oder des Transportsystems ist in Abhängigkeit eines Signals des zumindest einen Sensorelements mittels der Schaltvorrichtung 10 ausführbar. Anstelle des bekannten Not-Halt-Tasters wird in diesem Fall die komplette Fläche des Touchscreens 12 der Schaltvorrichtung 10 verwendet, welche betätigt wird, um eine Notabschaltung der Maschine, der Anlage und/oder des Transportsystems zu erreichen. Die Notabschaltung wird in Abhängigkeit von einer Überschreitung eines Schwellwerts oder in Abhängigkeit eines zeitlichen Verlaufs des Signals des zumindest einen Sensorelements ausgeführt.

Eine Möglichkeit besteht darin, dass mit dem zumindest einen Sensorelement eine Amplitude **oder** ein zeitlicher Verlauf eines Drucks, welches auf **den** Touchscreen 12 ausgeübt wird, erfasst wird und ein entsprechender Wert in dem Signal ausgegeben wird. Eine Notabschaltung der Maschine, der Anlage und/oder des Transportsystems kann somit dadurch ausgelöst werden, indem ein erhöhter Druck von der Bedienperson auf **den** Touchscreen 12 ausgeübt wird. Als Sensorelemente können die bekannten Sensoren, die üblicherweise für Touchscreens genutzt werden, verwendet werden. Eine Berührung des Touchscreens 12 kann beispielsweise kapazitiv, resistiv, optisch, induktiv, über Ultraschall (Surface Acoustic Wave), mittels Dispersive Signal Technologie (DST - Biegewellenverfahren) oder piezoelektrisch erfasst werden.

Ebenso kann mit dem zumindest einen Sensorelement eine Amplitude oder ein zeitlicher Verlauf einer Beschleunigung der Berührung des Touchscreens 12 erfasst werden. Somit ist es möglich, durch einen entsprechenden Schlag einer Bedienperson auf den Touchscreen 12 eine Notabschaltung der Maschine, der Anlage und/oder des Transportsystems zu bewirken.

Somit kann die komplette Fläche des Touchscreens 12 genutzt werden, um eine Notabschaltung zu bewirken. Um auf die Not-Halt-Funktion der Schaltvorrichtung 10 hinzuweisen, ist eine entsprechende Kennzeichnung an der Schaltvorrichtung vorhanden. Diese Kennzeichnung ist in der Figur schematisch durch den gestrichelten Bereich 18 dargestellt. Dieser Bereich 18 ist beispielsweise als gelb-rot-gelbe Markierung an der Schaltvorrichtung 10 angebracht. Zu diesem Zweck können beispielsweise auch entsprechende farbige Leuchtdioden (LEDs) oder dergleichen an der Schaltvorrichtung 10 angeordnet sein. Ebenso ist es denkbar, die Markierung bzw. Kennzeichnung auf dem Touchscreen 12, bevorzugt durch einen umlaufenden gelbrot-gelben Rahmen, darzustellen.

Nach Auslösen einer Notabschaltung der Maschine, der Anlage und/oder des Transportsystems kann dies in dem Bereich 18 oder auf dem Touchscreen 12 dargestellt werden. Zu diesem Zweck kann beispielsweise eine Textmeldung oder eine Abbildung eines Not-Halt-Tasters auf dem Touchscreen 12 dargestellt werden.

Ebenso kann die Notabschaltung über die Bedienung des Touchscreens 12 wieder aufgehoben werden. Hierzu können beispielsweise zwei Bedienbereiche 14 betätigt werden. Diese Bedienbereiche 14 können beispielsweise so angeordnet sein, dass sie zwingend mit zwei Händen bedient werden müssen.

Die Schaltvorrichtung 10 soll nach den bestehenden Sicherheitsnormen gefertigt sein. Die Bedienfront des Touchscreens 12, welche beispielsweise aus Glas gefertigt ist, sollte robust sein und eine hohe Schutzart (mindestens IP65) aufweisen.

Die in der Figur dargestellte Schaltvorrichtung 10 kann für unterschiedliche Arten von Bedientafeln, Maschinensteuertafel, Handhelds oder dergleichen genutzt werden. Hierbei kann die Schaltvorrichtung 10 verschiedenste Geometrien mit runden oder rechteckigen Grundformen aufweisen.

## Patentansprüche

1. Schaltvorrichtung (10) für eine Maschine, eine Anlage und/oder ein Transportsystem mit
- einem Touchscreen (12), und
- zumindest einem Sensorelement, das in dem Touchscreen (12) enthalten ist und mit dem eine Berührung des Touchscreens(12) erfassbar und ein entsprechendes Signal ausgebbar ist, **wobei**
- eine Notstillsetzung und/oder Notabschaltung der Maschine, der Anlage und/oder des Transportsystems in Abhängigkeit des Signals des zumindest einen Sensorelements mittels der Schaltvorrichtung (10) ausführbar ist.
**dadurch gekennzeichnet, dass**
- **die komplette Fläche des Touchscreens (12) als Auslösefläche dient, um die Notstillsetzung und/oder Notabschaltung zu bewirken, und**
- **die Notstillsetzung und/oder Notabschaltung in Abhängigkeit von einer Überschreitung eines Schwellwerts des Signals des zumindest einen Sensorelements ausführbar ist.**

2. Schaltvorrichtung (10) nach Anspruch 1, **dadurch gekennzeichnet, dass** mit dem zumindest einen Sensorelement eine **Amplitude eines** Drucks, welcher auf den Touchscreen (12) ausgeübt wird, erfassbar und ein entsprechender Wert in dem Signal ausgebbar ist.

3. Schaltvorrichtung (10) nach einem der vorhergehenden Ansprüche, **dadurch gekennzeichnet, dass** mit dem zumindest einen Sensorelement eine **Amplitude einer** Beschleunigung der Berührung des Touchscreens (12) erfassbar und ein entsprechender Wert in dem Signal ausgebbar ist.

4. Schaltvorrichtung (10) nach einem der vorhergehenden Ansprüche, **dadurch gekennzeichnet, dass** die Notstillsetzung und/oder Notabschaltung in Abhängigkeit von dem Signal des Sensorelements und in Abhängigkeit von einem Signal eines weiteren Sensorelements ausführbar ist.

5. Schaltvorrichtung (10) nach Anspruch **4, dadurch gekennzeichnet, dass** die Notstillsetzung und/oder Notabschaltung nur dann ausgeführt wird, wenn die Signale der zwei Sensorelemente gleichzeitig vorliegen.

6. Schaltvorrichtung (10) nach Anspruch **4** oder **5,** wobei die zwei Sensorelemente zum Erfassen gleicher Messgrößen ausgebildet sind.

7. Schaltvorrichtung (10) nach einem der vorhergehenden Ansprüche, **dadurch gekennzeichnet, dass** in Abhängigkeit eines Signals des zumindest einen Sensorelements mittels der Schaltvorrichtung (10) eine Not-Aus-Schaltung ausführbar ist, welche eine galvanische Trennung der Maschine, der Anlage und/oder des Transportsystems von der jeweiligen Spannungsversorgung bewirkt.

8. Schaltvorrichtung (10) nach einem der vorhergehenden Ansprüche, **dadurch gekennzeichnet, dass** mit ihr eine Notstillsetzung und/oder Notabschaltung einer Bedienperson kommunizierbar ist.

9. Verfahren zum Bedienen einer Maschine, einer Anlage und/oder eines Transportsystem durch
- Berühren eines Touchscreens (12), wobei der Touchscreen (12) mit zumindest einem Sensorelement ausgestattet ist, mit welchem die Berührung erfasst und ein entsprechendes Signal ausgegeben wird, **wobei**
- eine Notstillsetzung und/oder Notabschaltung der Maschine, der Anlage und/oder des Transportsystems in Abhängigkeit des Signals des zumindest einen Sensorelements mittels der Schaltvorrichtung (10) ausgeführt wird,
**dadurch gekennzeichnet, dass**
- die komplette Fläche des Touchscreens (12) als Auslösefläche dient, um die Notstillsetzung und/oder Notabschaltung zu bewirken, und
- die Notstillsetzung und/oder Notabschaltung in Abhängigkeit von einer Überschreitung eines Schwellwerts des Signals des zumindest einen Sensorelements ausgeführt wird.

## Claims

1. Switching device (10) for a machine, installation, and/or transportation system having
- a touch-screen (12) and
- at least one sensor element that is contained in the touchscreen (12) and by means of which touching of the touch-screen (12) can be registered and a corresponding signal fed out, **wherein**
- emergency stopping and/or emergency shutdown of the machine, installation, and/or transportation system can be performed by means of the switching device (10) as a function of the at least one sensor element's signal,
**characterised in that**
- the complete surface of the touchscreen (12) is used as a tripping surface in order to effect the emergency stopping and/or emergency shutdown, and
- the emergency stopping and/or emergency shutdown can be performed as a function of the exceeding of a threshold of the at least one sensor element's signal.

2. Switching device (10) according to claim 1,
**characterized in that** an amplitude of a pressure being exerted on the touch-screen (12) can be registered by means of the at least one sensor element and a corresponding value fed out in the signal.

3. Switching device (10) according to one of the preceding claims, **characterized in that** an amplitude of an acceleration in the touching of the touch-screen (12) can be registered by means of the at least one sensor element and a corresponding value fed out in the signal.

4. Switching device (10) according to one of the preceding claims, **characterized in that** emergency stopping and/or emergency shutdown can be performed as a function of the sensor element's signal and as a function of a signal of another sensor element.

5. Switching device (10) according to claim 4,
**characterized in that** emergency stopping and/or emergency shutdown will only be performed if both sensor elements' signals occur simultaneously.

6. Switching device (10) according to claim 4 or 5, with the two sensor elements being embodied for registering the same measured variables.

7. Switching device (10) according to one of the preceding claims, **characterized in that** by means of the switching device (10) as a function of the at least one sensor element's signal, emergency switch-off can be performed that will electrically isolate the machine, installation, and/or transportation system from the respective power supply.

8. Switching device (10) according to one of the preceding claims, **characterized in that** emergency stopping and/or emergency shutdown can be communicated therewith to an operator.

9. Method for operating a machine, installation, and/or transportation system by
- touching a touch-screen (12), with the touch-screen (12) being equipped with at least one sensor element by means of which said touching is registered and a corresponding signal fed out, **wherein**
- emergency stopping and/or emergency shutdown is performed on the machine, installation, and/or transportation system by means of the switching device (10) as a function of the at least one sensor element's signal,
**characterised in that**
- the complete surface of the touchscreen (12) is used as a tripping surface in order to effect the emergency stopping and/or emergency shutdown, and
- the emergency stopping and/or emergency shutdown can be performed as a function of the exceeding of a threshold of the at least one sensor element's signal.

## Revendications

1. Dispositif ( 10 ) de commutation pour une machine, une installation et/ou un système de transport, comprenant
- un écran ( 12 ) tactile et
- au moins un élément capteur, qui est contenu dans l'écran ( 12 ) tactile et par lequel un toucher de l'écran ( 12 ) tactile peut être détecté et un signal correspondant peut être émis, dans lequel
- une mise à l'arrêt d'urgence et/ou une déconnexion d'urgence de la machine, de l'installation et/ou du système de transport peut être effectuée, en fonction du signal du au moins un élément capteur, au moyen du dispositif ( 10 ) de commutation,
**caractérisé en ce que**
- la surface complète de l'écran ( 12 ) tactile sert de surface de déclenchement pour provoquer la mise à l'arrêt d'urgence et/ou la déconnexion d'urgence, et
- la mise à l'arrêt d'urgence et/ou la déconnexion d'urgence peut être effectuée en fonction d'un dépassement d'une valeur de seuil du signal du au moins un élément capteur.

2. Dispositif ( 10 ) de commutation suivant la revendication 1, **caractérisé en ce que** par le au moins un élément capteur, une amplitude d'une pression, qui est appliquée à l'écran ( 12 ) tactile, peut être détectée et une valeur correspondante peut être émise dans le signal.

3. Dispositif ( 10 ) de commutation suivant l'une des revendications précédentes, **caractérisé en ce que**, par le au moins un élément capteur, une amplitude d'une accélération du toucher de l'écran ( 12 ) tactile peut être détectée et une valeur correspondante peut être émise dans le signal.

4. Dispositif ( 10 ) de commutation suivant l'une des revendications précédentes, **caractérisé en ce que** la mise à l'arrêt d'urgence et/ou la déconnexion d'urgence peut être réalisée en fonction du signal de l'élément capteur et en fonction d'un signal d'un autre élément capteur.

5. Dispositif ( 10 ) de commutation suivant la revendication 4, **caractérisé en ce que** la mise à l'arrêt d'urgence et/ou la déconnexion d'urgence ne sont effectuées que si les signaux des deux éléments capteurs sont présents en même temps.

6. Dispositif ( 10 ) de commutation suivant la revendication 4 ou 5, dans lequel les deux éléments capteurs sont constitués pour la détection de mêmes grandeurs de mesure.

7. Dispositif (10) de commutation suivant l'une des revendications précédentes, **caractérisé en ce qu'**en fonction d'un signal du au moins un élément capteur, peut être réalisée, au moyen du dispositif ( 10 ) de commutation, une mise hors circuit d'urgence, qui provoque une séparation galvanique de la machine, de l'installation et/ou du système de transport de l'alimentation en tension respective.

8. Dispositif ( 10 ) de commutation suivant l'une des revendications précédentes, **caractérisé en ce que**, par lui, une mise à l'arrêt d'urgence et/ou une déconnexion d'urgence peut être communiquée à une personne de service.

9. Procédé de commande d'une machine, d'une l'installation et/ou d'un système de transport en
- touchant un écran ( 12 ) tactile, l'écran ( 12 ) tactile étant équipé d'au moins un élément capteur par lequel le toucher est détecté et un signal correspondant est émis, dans lequel
- une mise à l'arrêt d'urgence et/ou une déconnexion d'urgence de la machine, de l'installation et/ou du système de transport est effectuée au moyen du dispositif ( 10 ) de commutation en fonction du signal du au moins un élément capteur,
**caractérisé en ce que**
- la surface complète de l'écran ( 12 ) tactile sert de surface de déclenchement pour provoquer la mise à l'arrêt d'urgence et/ou la déconnexion d'urgence, et
- la mise à l'arrêt d'urgence et/ou la déconnexion d'urgence est effectuée en fonction d'un dépassement d'une valeur de seuil du signal du au moins un élément capteur.
